# EUROPEAN PATENT APPLICATION

(11) **EP 4 305 964 A1**
(43) Date of publication of application: **17.01.2024**
(21) Application number: 22767488.4
(22) Date of filing: 08.03.2022
(51) Int. Cl.: A21D 6/00, A21C 13/00, A21D 8/02, A21D 13/41

(54) **METHOD FOR PRODUCING FROZEN PIZZA DOUGH**

(30) Priority: 08.03.2021 KR 20210030430
(71) Applicant: CJ Cheiljedang Corporation, Seoul 04560 (KR)
(72) Inventor: CHOI, Jae Kyoung, Seoul 04560 (KR); SHIN, Hye Won, Seoul 04560 (KR); KIM, Eun Yi, Seoul 04560 (KR); KIM, Sang Geun, Seoul 04560 (KR); HA, Young Min, Seoul 04560 (KR); PARK, Hee Soo, Seoul 04560 (KR); KIM, Min Hyuk, Seoul 04560 (KR); KANG, Ki Moon, Seoul 04560 (KR)
(74) Representative: Bandpay & Greuter
(86) International application number: PCT/KR2022/003285
(87) International publication number: WO 2022/191592

(57) **Abstract**

The present invention relates to a method for preparing dough for frozen pizza, dough for frozen pizza prepared by the preparation method, and frozen pizza comprising the same.

## Description

### [Technical Field]

The present application relates to a method for preparing dough for frozen pizza and to dough for frozen pizza prepared by the method.

### [Background Art]

Pizza is a food cooked by topping bread made of wheat flour with meat, plants, cheese, and the like, and raw materials of the pizza may be divided into three kinds of dough, sauces, and toppings. Meanwhile, as the consumption of frozen foods increases, even in the case of pizza, frozen pizzas have been manufactured and sold. For frozen pizzas on the market, there are most parbaking frozen pizzas prepared by baking pizza dough in an oven, topping the pizza dough with topping ingredients, and then freezing the pizza dough.

The frozen pizza is reheated using a microwave oven or home oven and then eaten, but in the frozen pizza, since the pizza dough is baked once in the oven, there is a problem that the pizza dough is hardened again due to re-heat while the consumer cooks after thawing, and then the pizza dough is hard and the texture is not good.

Accordingly, as frozen pizzas that can be easily eaten, there is a continuous need to develop a technology that can produce dough for frozen pizza that do not differ in texture from pizzas eaten at pizza restaurants.

### [Prior Art Document]

### [Patent Document]

(Patent Document 1) Korean Laid-open Patent Publication No. 10-2019-0089275 (July 24, 2019)

### [Disclosure]

### [Technical Problem]

An object of the present application is to provide a method for preparing dough for frozen pizza having excellent texture even after reheating by uniformly increasing the number and size of pores inside the dough, increasing the extensibility of the dough, and decreasing the strength.

In addition, another object of the present application is to provide the dough for frozen pizza and frozen pizza including the dough for frozen pizza.

### [Technical Solution]

In order to solve the objects, the present application provides a method for preparing dough for frozen pizza comprising preparing second dough by aging first dough and mixing the first dough and the second dough; resting the mixed dough; proofing the rested dough; and freezing the proofed dough.

Further, the present application provides dough for frozen pizza comprising wheat flour, salt and yeast, wherein the dough for frozen pizza has hardness of 50 g to 150 g when taking out the dough for frozen pizza with a thickness of 1.2 to 1.7 cm from a freezer and cooking the dough for frozen pizza within 3 minutes by irradiating a 700 W microwave wave for 1 minute 30 seconds.

First, terms used in the present disclosure will be described.

The "dough" as used herein generally refers to a thick paste made by mixing powder such as wheat flour with a small amount of water and/or other liquids, and is usually used to make bakery products such as pizzas and bread. In addition, the "dough for pizza" used herein means that the dough is formed into a pizza shape.

As used herein, the "dough" refers to a paste that is thinly spread and cut into a bakery product shape, cooked in an oven or the like, burned, and then rapidly frozen.

As used herein, "thin dough" refers to dough having a thickness of 0.7 to 1.0 cm, and medium dough means dough having a thickness of 1.2 to 1.7 cm.

As used herein, "crust" refers to an outer surface that has become hard after burning of bakery products such as bread and confectionery, and refers to an bottom of the pizza or an edge portion of the pizza to which sauces or toppings are not applied, that is, the entire bread portion of the pizza when the bakery product is pizza.

Hereinafter, the contents of the present application will be described in more detail.

The present application provides a method for preparing dough for frozen pizza.

The method of the present application includes preparing second dough by aging first dough.

The first dough refers to a main paste (dough), and the second dough refers to low-temperature aged dough prepared by aging the first dough or a part of the first dough at a low temperature for a predetermined time. The part of the first dough may be a portion corresponding to 10 wt% to 50 wt% of the first dough. For example, the second dough may be prepared by thinly spreading and then cutting the first dough to form a pizza shape and aging the remaining dough at a low temperature.

In addition, the second dough may be dough aged at a low temperature after resting the first dough. For example, the second dough may be dough prepared by aging the separated dough at a low temperature after resting the first dough and then separating 10 to 50 wt% thereof.

The aging may be aging the first dough at 0°C to 3°C for 16 hours to 23 hours, 17 hours to 23 hours, or 18 hours to 23 hours.

In the case of aging in the range of temperature and/or time, as a gluten network is loosened, a plurality of pores are formed in a uniform shape to increase the thickness of the crust in the step of burning the dough and increase the heat transfer rate into gas-pockets formed, thereby preventing the texture of the pizza crust from being sticky.

The second dough may have the same composition as the first dough. The first dough and/or the second dough may include wheat flour, salt and yeast. In addition, the first dough and/or the second dough may further include at least one selected from the group consisting of sugars, fats and oils, and water.

The term "wheat flour" refers to powder made by grinding wheat, and may be used herein interchangeably with the term "flour". The wheat flour may use, for example, strong flour or medium flour as a main component, and the content of the wheat flour may be included in an amount of 50 to 80 parts by weight based on 100 parts by weight of the entire dough for frozen pizza.

The salt is used for foods and may be used without limitation as long as the salt is common salts, and may be, for example, salt, seasoning containing salt, brine (magnesium chloride), calcium sulfate, potassium sulfate, or a mixture thereof. The content of the salt may be included in 0.1 to 2 parts by weight based on 100 parts by weight of wheat flour.

The yeast is also referred to as yeast, and may be used without limitation as long as the yeast is generally used in the production of yeast-fermented foods, and may be, for example, raw yeast, instant dry yeast, or dry yeast. The content of the yeast may be included in an amount of 1 to 3 parts by weight based on 100 parts by weight of wheat flour.

The types of sugars are not limited as long as the sugars are used in the confectionery field, and for example, may consist of one or more selected from the groups consisting of sugar, oligosaccharide, starch syrup, honey, fructose, lactose, dextrin, maltose, oligosaccharide, trehalose, stevioside, aspartame, sorbitol, xylitol, mannitol and inositol. The amount of the sugars can be appropriately adjusted according to preference, and may be included in an amount of 1 to 10 parts by weight, 3 to 10 parts by weight, or 5 to 10 parts by weight based on 100 parts by weight of the dough for frozen pizza.

The types of the fats and oils are not limited as long as the fats and oils are used in the confectionery field, and for example, may also be liquid fats or oils selected from soybean oil, grape seed oil, sunflower oil, olive oil, corn oil, rapeseed oil, evening primrose oil, palm oil, red pepper seed oil, and palm oil, and may be solid fats or oils selected from butter, margarine, and shortening. The content of the fats and oils may be included in an amount of 1 to 10 parts by weight, 3 to 8 parts by weight, 3 to 7 parts by weight, or 2 to 5 parts by weight based on 100 parts by weight of the dough for frozen pizza.

The method of preparing the dough for frozen pizza of the present application includes mixing the first dough and the second dough.

By mixing the second dough with the first dough, the resistance and extensibility of the paste may be increased to form a stable internal structure.

The first dough and the second dough may be mixed in a weight ratio of 9:1 to 3:2, a weight ratio of 9:1 to 2:1, a weight ratio of 9:1 to 3:1, a weight ratio of 9:1 to 4:1, a weight ratio of 9:1 to 6:1, a weight ratio of 6:1 to 3:2, a weight ratio of 4:1 to 3:2, a weight ratio of 3:1 to 3:2, or a weight ratio of 2:1 to 3:2. When the first dough and the second dough are mixed in the range of weight ratio, large pores are uniformly formed, and the hardness, gumminess, and chewiness of the crust are lowered, thereby exhibiting a soft texture.

The method of preparing the dough for frozen pizza of the present application comprises resting the dough mixed with the first dough and the second dough.

The resting step refers to a step of adjusting the gluten binding and water balance in the paste by leaving the dough at room temperature for a predetermined time. In this process, the yeast acts between stabilized glutens to produce carbon dioxide, so that the dough rises.

The resting may be performed for 30 minutes to 120 minutes, 30 minutes to 90 minutes, 30 minutes to 70 minutes, 30 minutes to 60 minutes, 40 minutes to 120 minutes, 40 minutes to 90 minutes, 40 minutes to 70 minutes, 40 minutes to 60 minutes, 50 minutes to 120 minutes, 50 minutes to 90 minutes, 50 minutes to 70 minutes or 50 minutes to 60 minutes at room temperature. When the resting is performed in the range of time, the degree of softening and extensibility of the paste may increase, and the hardness of the crust after baking the dough may decrease. The room temperature may be 1°C to 35°C, 5°C to 35°C, 10°C to 35°C, 15°C to 35°C, 20°C to 35°C, 25°C to 35°C, 5°C to 30°C, 10°C to 30°C, 15°C to 30°C, 20°C to 30°C, 25°C to 30°C, 5°C to 25°C, 10°C to 25°C, 15°C to 25°C, 20°C to 25°C, 5°C to 20°C, 10°C to 20°C or 15°C to 20°C, specifically 25 ± 5°C.

The method for preparing the dough for frozen pizza of the present application comprises proofing the rested dough.

The proofing step is also called a fermentation step, and refers to a process of maximally raising the activity of yeast by adjusting the temperature and humidity. When the yeast is activated, carbon dioxide is produced and filled in the pores generated during the mixing process of the dough, and when the carbon dioxide is saturated, the carbon dioxide is emitted to the outside and then the dough rises.

The proofing may be performed at a temperature of 30 ± 10°C, a temperature of 30 ± 5°C, or a temperature of 30 ± 2°C for 20 minutes to 50 minutes, 25 minutes to 45 minutes, or 30 minutes to 40 minutes. When the proofing is performed in the range of time, the degree of softening and extensibility of the paste may increase, and the hardness of the crust after burning the dough may decrease.

The proofing may be performed at a humidity of 50% or less in the case of thin dough having a thickness of 0.7 to 1.0 cm, and specifically, at a humidity of 10% to 50%, a humidity of 20% to 50%, a humidity of 30% to 50% a humidity of 40% to 50%, a humidity of 10% to 40%, a humidity of 20% to 40%, or a humidity of 30% to 40%.

When the thin dough having a thickness of 0.7 to 1.0 cm is prepared by proofing in the range of humidity, it is possible to prepare dough with small and uniform pores, thereby imparting a thin and chewy texture when cooking after freezing.

In the case of medium frozen dough having a thickness of 1.2 to 1.7 cm, the proofing may be performed at a humidity of 50% to 80%, a humidity of 55% to 75%, a humidity of 60% to 75% a humidity of 65% to 75%, or a humidity of 65% to 70%.

When the medium dough having the thickness of 1.2 to 1.7 cm is proofed in the range of humidity, pores with large sizes are generated after the dough is baked to lower the hardness of the dough, thereby eating dough with a normal thickness, but a soft texture when cooking after freezing.

The method for preparing the dough for frozen pizza of the present application comprises freezing the proofed dough.

The freezing may be performed at a temperature of 30°C or less for 20 minutes or more, for example, at a temperature of - 20°C to - 40°C for 10 minutes to 30 minutes.

In the case of freezing the dough within the range of temperature and/or time, the sizes of ice crystals are small to maintain the excellent texture and prevent the loss of nutrients during thawing.

The method for preparing the dough for frozen pizza of the present application may optionally comprise a step of heat-treating the dough before the freezing step.

The heat-treating step is a process of heat-treating the surface of the paste by heating the proofed dough at a high temperature in an oven, and increases the temperature of the paste for a short time to rapidly inflate the dough.

The heat-treating is preferably performed at a temperature of 300°C to 350°C for 2 minutes to 3 minutes in terms of the texture of the crust.

Another aspect of the present application provides dough for frozen pizza.

The dough for frozen pizza is pizza dough containing wheat flour, salt and yeast, and may have the hardness of 50 g to 300 g when taking out the dough for frozen pizza with the thickness of 1.2 to 1.7 cm from a freezer and cooking the dough for frozen pizza within 3 minutes by irradiating a 700 W microwave for 1 minute 30 seconds.

The hardness shows the rigidity when chewing, and may be measured by cutting an edge portion of the pizza crust, wherein the edge portion of the pizza crust means a portion within a predetermined distance inward from the circumference of the pizza dough, wherein the predetermined distance may be 3.0 cm, 2 cm, or 1 cm.

In a specific embodiment, the hardness is measured by taking out the medium dough for frozen pizza with the thickness of 1.2 cm to 1.7 cm from a freezer and then cooking the pizza dough within 3 minutes by irradiating a 700 W microwave for 1 minute 30 seconds, and cutting the edge portion of the pizza crust within 5 minutes immediately after cooking.

The microwave may be irradiated using a microwave oven or the like.

The hardness of the dough for frozen pizza which is taken out from the freezer and then irradiated the 700 W of microwave for 1 minute 30 seconds within 3 minutes is in a range selected from the group consisting of one lower limit selected from 50 g, 60 g, 70 g, 80 g, 90 g, 100 g, 110 g and 120 g and one upper limit selected from 300 g, 290 g, 280 g, 270 g, 260 g, 250 g, 240 g, 230 g, 220 g, 210 g, 200 g, 190 g, 180 g, 170 g, 160 g, and 150 g, and may be, for example, 50 g to 300 g, 50 g to 250 g, 50 g to 200 g, 50 g to 150 g, and 50 g to 100 g. When the hardness of the dough for frozen pizza is in the above range, the cross-section of the crust of the re-cooked frozen pizza is not sticky and may have a soft texture, thereby implementing an excellent texture that is equal to or higher than that of pizza cooked directly at a pizza restaurant. In addition, it is possible to implement the soft texture when cooked as compared to conventional frozen pizzas.

In the present application, `gumminess' refers to a force required to chew semi-solid food enough to be swallowed, and 'chewiness' refers to a force required to chew solid food to be swallowed.

The gumminess of the dough which is taken out of the freezer and then irradiated with the 700 W microwave for 1 minute and 30 seconds within 3 minutes may be in a range selected from the group consisting of one lower limit selected from 40, 50, 60, 70, 80, 90, 100, 110 and 120 and one upper limit selected from 200, 190, 180, 170, 160, 150, 140, 130, 120, 110, 100, 90, 80, and 70, and may be, for example, 40 to 200, 40 to 150, 40 to 100, 40 to 70, and 50 to 100. When the gumminess of the dough for frozen pizza is within the above range, the stickiness (toughness) is lowered, thereby implementing an excellent texture.

The chewiness of the dough for frozen pizza which is taken out of the freezer and then irradiated with the 700 W microwave for 1 minute and 30 seconds within 3 minutes may be in a range selected from the group consisting of one lower limit selected from 30, 40, 50, 60, 70, 80, 90, 100, 110 and 120 and one upper limit selected from 150, 140, 130, 120, 110, 100, 90, 80, 70, and 60, and may be, for example, 30 to 150, 30 to 100, 30 to 80, 30 to 70, and 40 to 60. When the chewiness of the dough for frozen pizza is within the above range, less force is applied when chewing, thereby implementing an excellent texture.

The dough for frozen pizza may comprise the first dough and the second dough prepared by aging the first dough in a weight ratio of 9:1 to 3:2, a weight ratio of 9:1 to 2:1, a weight ratio of 9:1 to 3:1, a weight ratio of 9:1 to 4:1, a weight ratio of 9:1 to 6:1, a weight ratio of 6:1 to 3:2, a weight ratio of 4:1 to 3:2, a weight ratio of 3:1 to 3:2, and a weight ratio of 2:1 to 3:2. When the first dough and the second dough are mixed in the above range of weight ratio, large pores are uniformly formed, and the hardness, gumminess, and chewiness of the crust are lowered, thereby exhibiting a soft texture.

The second dough may be prepared by aging the first dough at 0°C to 3°C for 16 hours to 23 hours, 17 hours to 23 hours, 18 hours to 23 hours, 16 hours to 22 hours, 17 hours to 22 hours, or 18 hours to 22 hours. In the case of aging in the above range of temperature and/or time, as a gluten network is loosened, a plurality of pores are formed in a uniform shape to increase the thickness of the crust in the step of baking the dough and increase the heat transfer rate into gas-pockets, thereby preventing the texture of the pizza crust from being sticky.

The dough for frozen pizza may be the dough which has been prepared according to the method for preparing the dough for frozen pizza described above.

With respect to the wheat flour, salt, yeast, resting, proofing, freezing, and heat-treating, the aforementioned contents may be applied in the same manner.

Yet another aspect of the present application provides frozen pizza comprising the dough for frozen pizza described above. The frozen pizza may further comprise topping ingredients in addition to the dough for frozen pizza.

The topping ingredients may be used without limitation, and may be, for example, cheese, pepperoni, beef, bacon, ham, onion, green pepper, olive, mushroom, pineapple, and the like. The frozen pizza may comprise the dough for frozen pizza, and the dough for frozen pizza may have the hardness of 50 g to 300 g, the gumminess of 40 to 200, and the chewiness of 30 to 150.

With respect to the dough for frozen pizza, wheat flour, salt, yeast, hardness, gumminess, chewiness, and microwave, the aforementioned contents may be applied in the same manner.

Even if the frozen pizza of the present application is taken out from the freezer and then reheated using a microwave oven or home oven without separate thawing, there is an advantage that the texture of the crust is soft to allow consumers to quickly cook and eat pizza with better texture than delivery pizzas or conventional frozen pizzas.

### [Advantageous Effects]

According to the method for preparing the dough for frozen pizza according to the present application, it is possible to provide dough for frozen pizza having a soft texture even if reheating (re-cooking) without separate thawing after freezing by increasing the extensibility of the paste, reducing the hardness, and uniformly increasing the number and the sizes of the pores inside the paste.

The dough for frozen pizza and the frozen pizza of the present application exhibits a soft texture because the hardness, gumminess, and chewiness are lower than those of conventional dough for frozen pizza and frozen pizza, the cross section of the crust is not sticky, and a lot of force is not applied when chewing, so that the texture is equal to or superior to that of pizza cooked directly at a pizza restaurant.

The effects of the present application are not limited to the effects mentioned above, and other effects not mentioned will be clearly understood by those skilled in the art from the following description.

### [Description of Drawings]

FIG. 1 is a photograph of confirming the volume of pizza and the number of pores according to the presence or absence of a mixing process of first dough and second dough and a proofing process.
FIG. 2 shows strength (bar graph) and degree of softening (line graph) of a paste according to the presence or absence of a resting process and a proofing process and a time of the process: R0P0 is a paste without performing the resting process and the proofing condition; R0P30 is a paste that is proofed for 30 minutes without the resting process; R60P0 is a paste that is rested for 60 minutes without proofing; R60P30 is a paste that is rested for 60 minutes and proofed for 30 minutes.
FIG. 3 shows tension (bar graph), extensibility (blue line graph), and internal energy (yellow line graph) of a paste according to the presence or absence of a resting process and a proofing process and a time of the process: R0P0 is a paste without performing the resting process and the proofing condition; R0P30 is a paste that is proofed for 30 minutes without the resting process; R60P0 is a paste that is rested for 60 minutes without proofing; R60P30 is a paste that is rested for 60 minutes and proofed for 30 minutes.
FIG. 4 illustrates chewiness, gumminess, and hardness of a pizza crust after microwave-cooking according to the presence or absence of a resting process and a proofing process.
FIG. 5 is a photograph of confirming cross-sectional characteristics and pore characteristics of a pizza crust after microwave-cooking according to the presence or absence of a proofing process and humidity conditions.
FIG. 6 is a photograph of confirming cross-sectional characteristics and pore characteristics of a pizza crust after microwave-cooking according to a mixing ratio of first dough and second dough.
FIG. 7 illustrates chewiness, gumminess, and hardness of a pizza crust after microwave-cooking according to a mixing ratio of first dough and second dough.
FIG. 8 illustrates comparing chewiness, gumminess, and hardness of pizza crusts after microwave-cooking in frozen pizza prepared by a preparation method of the present application and commercial frozen pizza.

Hereinafter, the present invention will be described in detail by Examples and Experimental Examples. However, the following Examples and Experimental Examples are just illustrative of the present invention, and the contents of the present invention are not limited to the following Examples and Experimental Examples.

### [Preparation Example 1]

### Method for preparing conventional dough for frozen pizza and frozen pizza

Basic conventional dough for frozen pizza and frozen pizza were prepared as follows.

First, wheat flour, processed grain products, sugar, refined salt, glucose, fats, yeast and purified water were put into a kneader and kneaded at 26°C for 2 minutes at low speed and 3 minutes at high speed (first dough). Thereafter, the paste was rested for 15 minutes and then divided into 250 g. Then, the divided paste was rolled and sheeted to form a pizza shape and then cut to 1/4 size. The cut dough was put into a fermentation chamber at 25°C and proofed for 30 minutes. First topping was performed on the dough after proofing was completed, and second topping was performed after baking the first topped dough in the oven. When the second topping was completed, the paste was put into rapid freezer and frozen in a -35°C for 30 minutes to prepare dough for frozen pizza and frozen pizza.

### [Example 1]

### Confirmation of effect of mixing process of first dough and second dough on pizza crust

### <1-1>. Confirmation of thickness change of pizza crust according to mixing of second dough

In order to confirm an effect of mixing the second dough with the existing dough (first dough) on the thickness and pore formation of the pizza crust, the dough for frozen pizza was prepared in the same manner as in Preparation Example 1 except for mixing the second dough with the first dough, which was the dough of Preparation Example 1, and then cooked in a microwave to compare the volume and thickness of the crust.

Specifically, the second dough prepared by aging the remaining first dough after cutting in Preparation Example 1 in a low-temperature aging chamber at 0°C to 3°C for 16 to 24 hours was mixed to be in an amount of 25 wt% to 30 wt% of the entire paste.

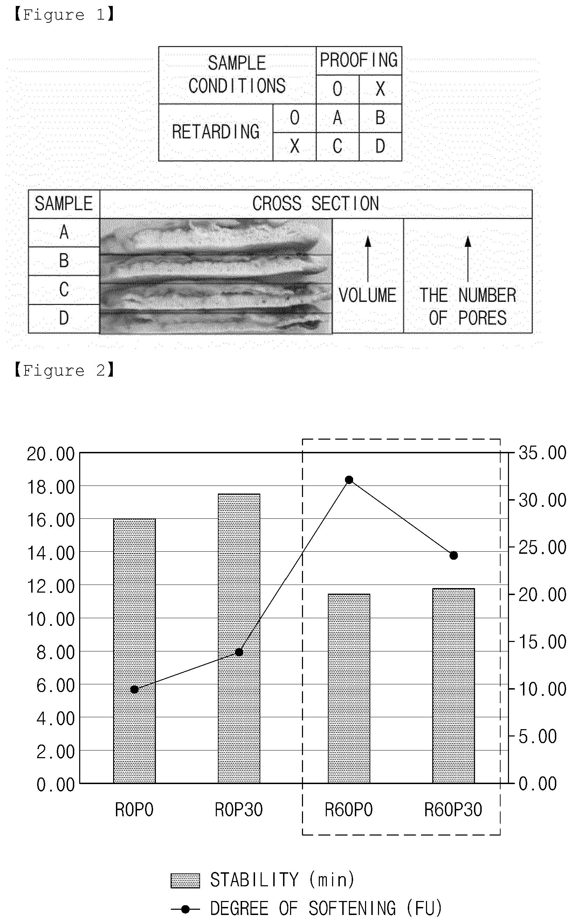

As a result, as illustrated in FIG. 1, it was confirmed that the volume of the pizza was increased and the thickness thereof was increased when the first dough was mixed with the second dough, compared to a case of using only the first dough.

### <1-2>. Confirmation of physical properties of pizza crust according to low-temperature aging time of second dough

In order to confirm an effect of a low-temperature aging time of the second dough on the hardness of the pizza crust, frozen pizza was prepared in the same manner as in Example 1-1, except for performing low-temperature aging for 0, 1, 18, and 24 hours, and then TEXTURE PROFILE ANALYSIS (TPA) was performed.

First, the frozen pizza was cut by 1/4 based on 10 inches, stored in a frozen state and then taken out, and moved to a microwave oven within 3 minutes, cooked for 1 minute and 30 seconds based on 700 W, and then the temperature and height of the crust edge portion of the pizza were measured. After leaving the frozen pizza at room temperature for 2 minutes, the temperature was measured again, and the crust was cut to 10 mm in width and length using a bread knife so that the crust was not pressed and sampled. A TEXTURE ANALYZER (TA XT-plus) was set to a TPA mode, and then set to PRE-TEST SPEED 1.00 MM/S, TEST SPEED 0.8 MM/S, POST-TEST SPEED 0.8 MM/S, STRAIN 70%, DISTANCE 5 MM, and TIME 3SEC, and P-25 (mm) was used for a probe. The physical properties of the prepared samples were measured using the TEXTURE ANALYZER.

As a result, as shown in Table 1, as a result of texture analysis according to the low temperature aging time of the second dough, it was confirmed that the hardness value tended to decrease as the aging time elapsed. After 0, 1 h, 18 h, and 24 h of aging, it was confirmed that the hardness values were significantly reduced to 6322 g, 762 g, 215 g, and 4 g, respectively. However, in the case of 24 h, the density of the paste was lowered due to overfermentation, and the sheeting workability of spreading the paste to a certain thickness was not good during mass production in a manufacturing plant. Accordingly, it was proved that when the second dough was aged at a low temperature for about 16 h to 23 h and mixed with first dough, both the hardness value and process workability of the frozen pizza after cooking were excellent.

**[Table 1]**

| | Hardness (g) | Gumminess | Chewiness |
|---|---|---|---|
| Retarding X | 6322.025 | 2.193 | 1.46 |
| Retarding 1h | 762.302 | 3.187 | 2.601 |
| Retarding 18h | 215.478 | 2.393 | 1.997 |
| Retarding 24h | 4.444 | 133.126 | 112.375 |

### <1-3>. Confirmation of stability of paste according to mixing of second dough

In order to confirm an effect of the mixing of the second dough on the viscoelasticity of a paste, the paste was prepared in the same manner as in Example 1-1, except for performing low-temperature aging for 16 to 23 hours, and then the viscoelasticity of the paste was measured.

Specifically, the mixed dough of the first dough and the second dough was divided into 150G, and then the divided paste was rounded, put into a machine, and then rolled and spread. After applying the resting process to the long rolled and sheeted paste, the paste was put in a mold and sampled. The machine was operated while taking care not to release gas in the paste. The viscoelasticity of the paste was measured until the paste was broken.

As a result, as shown in Table 2, as a result of Extensograph analysis according to the presence or absence of addition of 30 wt% of the second dough, in the dough in which the second dough was not mixed, after resting, resistance (BU) of the paste was lowered and there was no difference in extensibility. On the other hand, it was confirmed that when 30% of the second dough was applied, the resistance and extensibility of the paste after resting were increased. It was considered to form a stable structure in the dough by mixing the aged second dough.

**[Table 2]**

| | Second dough 0% | | | Second dough 300 | | |
|---|---|---|---|---|---|---|
| | Before resting | After resting | Differ ence | Before resting | After resting | Differe nce |
| Resistance [BU] | 1578.0 | 1181.0 | (-398) | 1239.0 | 1478.0 | (+239) |
| Extensibility [mm] | 71.1 | 75.3 | (+4.2) | 80.3 | 105.2 | (+24.9) |

### [Example 2]

### Confirmation of effect of resting and proofing processes on pizza crust

In order to confirm the effect of the resting process and/or the proofing process on the crust, a paste was prepared in the same manner as in Example 1-1, but characteristics thereof was confirmed as follows in pastes prepared by performing neither a resting process nor a proofing condition (R0P0), performing proofing for 30 minutes without the resting process (R0P30), performing resting for 60 minutes without proofing (R60P0), and performing resting for 60 minutes and proofing for 30 minutes (R60P30). The resting process was performed by resting the mixed dough at 15°C to 30°C for 30 to 120 minutes, and the proofing process was performed at 25°C to 45°C under a 20 to 40% humidity condition in a fermentation room for 35 ± 5 minutes.

### <2-1>. Confirmation of degree of softening of paste

First, the degree of softening of the paste was confirmed through Farinograph measurement.

Specifically, for Farinograph measurement, dough of 300 G was prepared based on a moisture content of 140, and 30°C distilled water was added into a burette, and then air pockets were removed and overflowed to adjust the height. The prepared sample was added and PREMIX was performed for 1 minute by pressing a START button (green) on a FARINOGRAPH device. After clicking START in a PROGRAM, when a blue dot appeared at the bottom of the graph, distilled water was added. A SCRAPER was put into a hole of LID and the samples were collected in one place. The lid was closed and a test was performed for 20 minutes. The amount of added water was adjusted to match 500 BU and repeated 2 to 3 times.

As a result, as shown in Table 3 and FIG. 2, it was confirmed that the resting process had an effect of lowering the strength of the paste and increasing the degree of softening. As a result of Farinograph measurement according to the presence or absence of the proofing process, it was confirmed that the proofing also served to lower the strength of the paste, but the resting was performed for about 60 minutes to have a great effect on softening the paste.

**[Table 3]**

| | Stability [min] (Time until upper part of Graph first reaches 500 BU line, Graph starts to fall down, and upper part pass through 500 BU line) | Degree of softening [BU] (Distance between center of Graph width and 500 BU line after 20 minutes of mixing by adding water to wheat flour) |
|---|---|---|
| R0P0 | 16 | 10 |
| R0P30 | 17.4 | 14 |
| P60P0 | 11.4 | 32 |
| R60P30 | 11.8 | 24 |

### <2-2>. Confirmation of strength and extensibility of paste

The strength and extensibility of the paste were confirmed by Extensograph measurement. The Extensograph measurement was performed in the same manner as the methods described in Example 1-3.

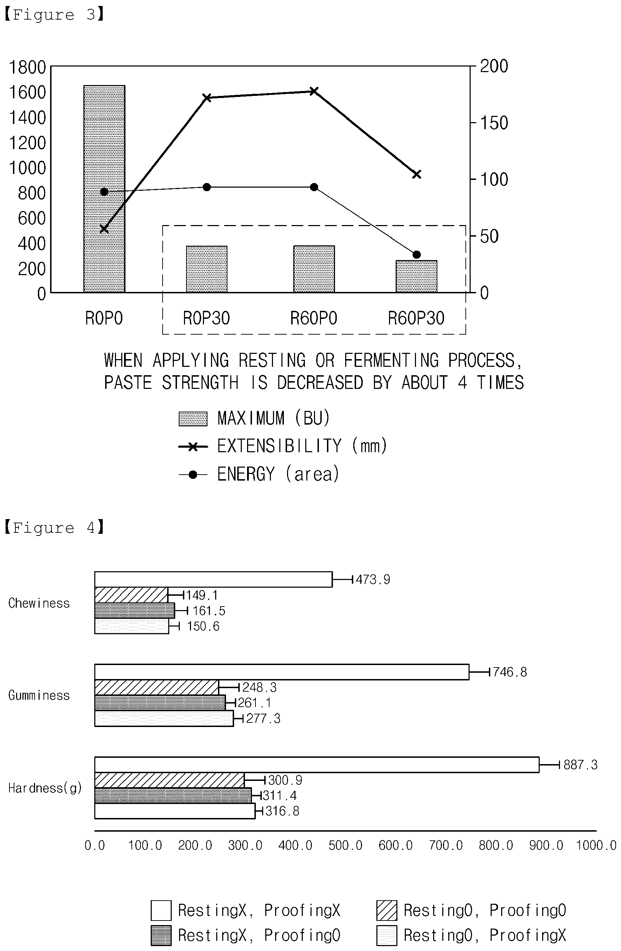

As a result, as shown in Table 4 and FIG. 3, it was confirmed that the resting process lowered the strength of the paste and increased the degree of softening. In addition, it was confirmed that the proofing process also lowered the strength of the paste and increased the extensibility.

**[Table 4]**

| | Energy [cm²] (whole area of Graph Curve) | Extensibility [mm] (resistance when Curve is extended to 5 cm) | Maximum [BU] (resistance when Curve reaches maximum) |
|---|---|---|---|
| R0P0 | 89.2 | 56.2 | 1638 |
| R0P30 | 93.4 | 171.9 | 367.7 |
| R60P0 | 94.3 | 177.5 | 377.4 |
| R60P30 | 33.4 | 104.4 | 254.9 |

### <2-3>. Confirmation of texture of pizza crust

In order to confirm the effect of the resting process and/or the proofing process on the crust, the texture of the crust was confirmed using a texture analyzer after the pizza was prepared.

Specifically, texture analysis was performed after preparing dough for frozen pizza and pizza in the same manner as in Example 1-1 except for whether including the resting process and the proofing process or not.

As a result, as illustrated in FIG. 4, it was confirmed that the applying of the resting process and the proofing process reduced the hardness of the crust after microwave cooking to about 66%.

### [Example 3]

### Confirmation of effect of humidity on crust in proofing process

In order to confirm an effect of a humidity condition on the crust in the proofing process, a paste was prepared by mixing the second dough in the same manner as in Example 1-1, but an experiment was conducted by setting the resting time to 60 minutes and changing the proofing condition. In an experimental group, the proofing was not performed, or the proofing was performed under 30% and 70% of humidity conditions to prepare frozen pizza having dough for frozen pizza with a thickness of 1.2 cm to 1.5 cm, and then the cross-sectional characteristics and pore characteristics of the pizza crust were confirmed.

In order to confirm the pore characteristics, the crust edge portion of the frozen pizza was sliced into 0.1 mm to 0.2 mm sizes and prepared. In addition, the pore characteristics were confirmed using a 100X lens of an optical microscope (Axiovert 40 C, Carl Zeiss).

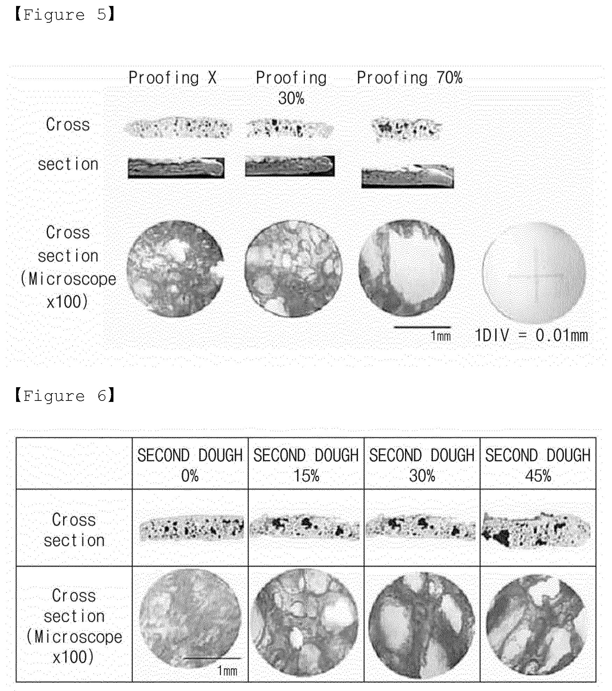

As a result, as illustrated in FIG. 5, in an experimental group without the proofing, pores were not generated or were generated in very small sizes, and when the proofing was performed at 30% humidity, pores of 0.1 mm to 0.5 mm (the maximum diameter of a circle or semicircle) larger than that of the non-proofing group were confirmed in a uniform shape to exhibit a chewy texture. Therefore, it was determined that the dough prepared under a 30% humidity condition for proofing was applicable to thin dough (thin crust).

On the other hand, it was confirmed that during proofing under a 70% humidity condition, pores with larger sizes (maximum diameter of a circle or semicircle of 1 mm to 1.5 mm) were generated compared to the pores under the 30% humidity condition, resulting in a softer crust texture. Therefore, it was determined that the dough prepared under the 70% humidity condition for proofing was applicable to normalthick dough (medium crust).

### [Example 4]

### Method for preparing improved dough for frozen pizza and frozen pizza

### <4-1>. Method for preparing thin-dough frozen pizza

By combining the results of Examples 1 to 3, thin dough was prepared as follows.

Wheat flour, processed grain products, sugar, refined salt, glucose, fats, yeast and purified water were put into a kneader and kneaded at 26°C for 2 minutes at low speed and 3 minutes at high speed to prepare first dough. Thereafter, mixed dough was prepared by adding 10 to 40% of second dough prepared by aging dough having the same composition as the first dough in a low-temperature aging room at 0 to 3°C for 16 to 23 hours to the first dough. Then, the mixed dough was divided into 160 to 200 g and the divided paste was rolled and sheeted to form a pizza shape and then cut to 1/4 size. The cut mixed dough was rested at 15 to 30°C for 30 to 120 minutes. Then, at 25°C to 45°C and under a humidity condition of 20% to 40%, proofing was performed for 35 ± 5 minutes in a fermentation chamber. After the proofing was completed, the dough was baked in an oven and then placed and frozen in a - 35°C freezer for 30 minutes to prepare thin dough having a thickness of 0.7 to 1.0 cm. In addition, first topping was performed on the dough after the proofing was completed, and second topping was performed after baking the first topped dough in the oven. After the second topping was completed, the paste was placed and frozen in a - 35°C freezer for 30 minutes to prepare thin frozen pizza having a thickness of 0.7 to 1.0 cm.

### <4-2>. Method for preparing medium-dough frozen pizza

By combining the results of Examples 1 to 3, medium dough was prepared as follows. In the same method as in Example 4-1, mixed dough was divided into 220 to 260 g to prepare thick dough, and the humidity condition of proofing was adjusted only to 55% to 85%, and medium dough having a thickness of 1.2 to 1.7 cm and frozen pizza were prepared.

### [Example 5]

### Confirmation of effect of mixing ratio of second dough on pizza crust

### <5-1>. Confirmation of physical properties of pizza crust according to mixing ratio of second dough

In order to confirm an effect of a mixing ratio of second dough on a pizza crust, medium-dough frozen pizza was prepared in the same manner as in Example 4-2, but the second dough was mixed to 0%, 150, 30%, and 45% to prepare frozen pizza, and then the frozen pizza was cooked in a microwave to confirm the physical properties of the pizza crust.

### (1) Confirmation of pore characteristics

The pore characteristics of each frozen pizza prepared according to the mixing ratio of the second dough were confirmed in the same manner as in Example 3.

As a result, as illustrated in FIG. 6, as a result of confirming the pore characteristics of the pizza crust according to the mixing ratio of the second dough, in an experimental group (0%) in which the second dough was not mixed, it was confirmed that pores did not appear or existed in very small sizes. Accordingly, in the dough with poor pore formation, the cross section of the pizza dough after cooking became sticky to have a poor texture. On the other hand, in an experimental group in which 15% of the second dough was applied, it was confirmed that the pore size was significantly increased, and pores having a maximum diameter of a circle or a semicircle of 0.2 mm to 0.7 mm were formed. In addition, in an experimental group in which 30% of the second dough was applied, it was confirmed that large pores (maximum diameter of a circle or semicircle of 0.6 mm to 1.2 mm) were uniformly formed. The uniform pores had an effect of keeping the thickness of the pizza uniform and evening the pizza when passing through the oven. Meanwhile, in an experimental group in which 45% of the second dough was applied, it was confirmed that the sizes of the pores increased, but appeared nonuniformly.

### (2) Confirmation of difference in crust texture

TEXTURE PROFILE ANALYSIS (TPA) was performed to confirm the crust texture of each frozen pizza prepared according to the mixing ratio of the second dough. The analysis conditions of the TPA were performed in the same manner as in Example 1-2.

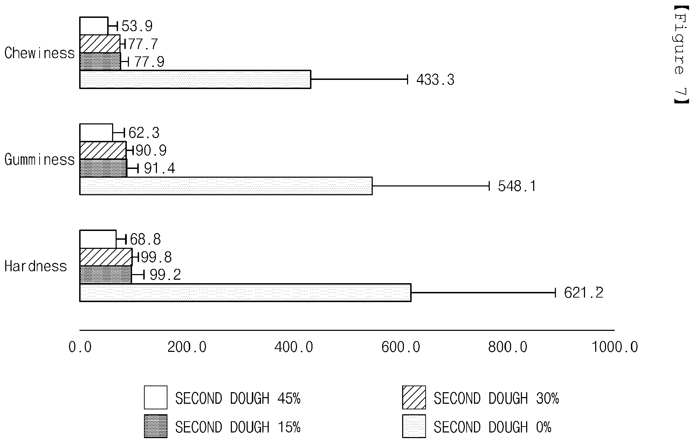

As a result, as illustrated in FIG. 7, it was confirmed that when the second dough was not added (Second dough 0%), the hardness value was very high, whereas when 15% of the second dough was added (Second dough 15%), the hardness value was lowered and then the soft texture was implemented even after re-cooking after freezing. It was confirmed that when 30% of the second dough was added (Second dough 30%), a hardness value similar to Second dough 15% was shown, and when 45% of the second dough was added (Second dough 45%), the hardness value was further lowered to be softer.

### (3) Confirmation of paste stability

In order to confirm the stability of each paste prepared according to the mixing ratio of the second dough, the viscoelasticity of the paste was measured in the same manner as in Example 1-3.

As a result, as shown in Table 5 below, it was confirmed that as the addition amount of the second dough increased, the resistance increased, and the extensibility was the highest in a 30% addition group. In addition, when comparing elasticity coefficient, it was confirmed in a 45% addition group, as the elasticity coefficient was increased, the workability during a sheeting process was somewhat lowered.

**[Table 5]**

| | Energy [cm²] (whole area of Graph Curve) | Resistance [BU] (resistance when Curve is extended by 5 cm) | Extensibility[mm] (length extended until dough is broken) | Elasticity coefficient (value calculated by resistance/ extensibility) |
|---|---|---|---|---|
| Second dough 150 | 108.3 | 380 | 157 | 2.420 |
| Second dough 300 | 126.3 | 409 | 171.9 | 2.38 |
| Second dough 450 | 143.4 | 577 | 154.8 | 3.73 |

When combining the above results, it was confirmed that when about 10% to 40% of the second dough was mixed with the first dough, when the dough was prepared, the process workability was also smooth, and when the prepared frozen pizza crust was re-cooked, the cross section was not sticky and a soft texture was exhibited.

### [Example 6]

### Comparison in texture between conventional delivery pizza and frozen pizza

In order to compare the texture after microwave cooking of the medium-dough frozen pizza prepared by the method of Example 4-2 with those of conventional delivery pizza and conventional frozen pizza, the following experiment was conducted. The texture of the medium-dough frozen pizza of the present application was confirmed in the same manner as in Example 1-2.

### <6-1>. Comparison with conventional delivery pizza

For comparison with conventional delivery pizza, a target was set as `Pappa John's Original Dough' pizza, which was conventional delivery pizza, and the following two cases were sampled: (1) after freezing the pizza, TPA was performed in the same manner as in Example 1-2 (Company P-M.W cooking), and (2) in a non-frozen state, the crust was cut to 10 mm in width and length using a bread knife so that the crust was not pressed, and sampled and analyzed under the same TPA conditions as in (1) above (Company P).

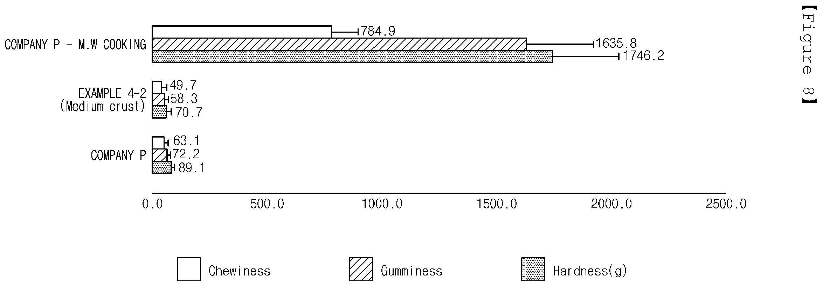

As a result, as shown in FIG. 8, it was confirmed that the hardness of the pizza crust after microwave-cooking the medium-dough frozen pizza of the present application was decreased compared to those of known pizzas, so that the soft texture was maintained even after re-cooking after freezing.

Specifically, when comparing a texture value (Hardness, g) of Medium crust, it was confirmed that in the case of Sample (1), in which Target pizza (Papa John's Pizza) was cooled and then cooked in M.W, the hardness was very high. On the other hand, in the case of the medium-dough frozen pizza of the present application, it was confirmed that the hardness was significantly lower than Sample (1), so that the degree of softening was increased, and it was confirmed that the hardness was further lowered even as compared with Sample (3), which was non-frozen pizza.

### <6-2>. Comparison with conventional frozen pizza

For comparison with other sold frozen pizzas, TPA was performed in the same manner as in Example 1-2 on frozen pizzas of Company S, Company A, and Company B.

As a result, as shown in Table 6, it was confirmed that the medium-dough frozen pizza of the present application had a softer texture than conventional frozen pizzas.

**[Table 6]**

| | **Example (Medium crust)** | **Comparative Example 1 Company S** | **Comparative Example 2 Company A** | **Comparative Example 3 Company B** |
|---|---|---|---|---|
| Hardness (g) | 70.7 | 1189.8 | 300.6 | 170.2 |
| Gumminess | 58.3 | 1151.0 | 236.8 | 141.8 |
| Chewiness | 49.7 | 492.4 | 189.6 | 116.8 |

## Claims

1. A method for preparing dough for frozen pizza comprising:
preparing second dough by aging first dough and mixing the first dough and the second dough;
resting the mixed dough;
proofing the rested dough; and
freezing the proofed dough.

2. The method for preparing the dough for frozen pizza of claim 1, wherein the aging is performed at 0°C to 3°C for 16 hours to 23 hours.

3. The method for preparing the dough for frozen pizza of claim 1, wherein the first dough and the second dough are mixed in a weight ratio of 9:1 to 3:2.

4. The method for preparing the dough for frozen pizza of claim 1, wherein the resting is performed at room temperature of 25 ± 5°C for 30 minutes to 120 minutes.

5. The method for preparing the dough for frozen pizza of claim 1, wherein the proofing is performed at room temperature of 30 ± 10°C for 20 minutes to 50 minutes.

6. The method for preparing the dough for frozen pizza of claim 5, wherein the proofing is performed at a humidity of 10% to 50% in the case of dough having a thickness of 0.7 to 1.0 cm, and at a humidity of 50% to 80% in the case of dough having a thickness of 1.2 to 1.7 cm.

7. The method for preparing the dough for frozen pizza of claim 1, further comprising:
heat-treating the dough before the freezing.

8. The method for preparing the dough for frozen pizza of claim 7, wherein the heat-treating is performed at a temperature of 300°C to 350°C for 2 minutes to 3 minutes.

9. Dough for frozen pizza comprising wheat flour, salt and yeast, wherein the dough for frozen pizza has hardness of 50 g to 300 g when taking out the dough for frozen pizza with a thickness of 1.2 to 1.7 cm from a freezer and cooking the dough for frozen pizza within 3 minutes by irradiating a 700 W microwave wave for 1 minute 30 seconds.

10. The dough for frozen pizza of claim 9, wherein when measured by a Texture Analyzer (TA), the dough for frozen pizza has gumminess of 40 to 200, and chewiness of 30 to 150.

11. The dough for frozen pizza of claim 9, wherein the dough for frozen pizza comprises first dough and second dough prepared by aging the first dough in a weight ratio of 9:1 to 3:2.

12. The dough for frozen pizza of claim 11, wherein the second dough is prepared by aging the first dough at 0°C to 3°C for 16 hours to 23 hours.

13. The dough for frozen pizza of claim 9, wherein the dough for frozen pizza is prepared by the preparation method of claim 1.

14. Frozen pizza comprising the dough for frozen pizza of any one of claims 9 to 13.
